(19) Europäisches Patentamt
European Patent Office
Office européen des brevets

(11) **EP 4 759 601 A1**

(12) **EUROPEAN PATENT APPLICATION**

(43) Date of publication:
**17.06.2026 Bulletin 2026/25**

(21) Application number: **25222710.3**

(22) Date of filing: **11.12.2025**

(51) International Patent Classification (IPC):
***B60K 35/10*** *(2024.01)* ***B60K 35/22*** *(2024.01)*

(52) Cooperative Patent Classification (CPC):
**B60K 35/22; B60K 35/10;** B60K 2360/1438;
B60K 2360/199

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.12.2024 JP 2024217315**

(71) Applicant: **Toyota Jidosha Kabushiki Kaisha
Toyota-shi, Aichi-ken 471-8571 (JP)**

(72) Inventors:
• **TANAKA, Seiichi
Toyota-shi, 471-8571 (JP)**

• **FUJIWARA, Tatsuro
Toyota-shi, 471-8571 (JP)**
• **TSUJINO, Miki
Toyota-shi, 471-8571 (JP)**
• **ONISHI, Kanta
Toyota-shi, 471-8571 (JP)**
• **KOBATAKE, Yasuhiro
Toyota-shi, 471-8571 (JP)**
• **YOKOYAMA, Yuu
Toyota-shi, 471-8571 (JP)**

(74) Representative: **D Young & Co LLP
3 Noble Street
London EC2V 7BQ (GB)**

(54) **VEHICLE AND DISPLAY DEVICE**

(57)    A vehicle (1) includes a first display module (21) arranged in front of a steering wheel (4), and a second display module (22,23) arranged on a vehicle (1) rear side of the first display module (21) on at least one side of the first display module (21) in a vehicle (1) width direction and including a touch panel (27). On a rear surface of the second display module (22,23), a guide portion (220, 230) configured to determine positions of one or more second fingers that are fingers other than a first finger that operates the touch panel (27) and to be placed on the rear surface of the second display module (22,23) is provided.

[Fig. 2]

EP 4 759 601 A1

[Fig. 3]

OUTER SIDE
OF VEHICLE ←        25        24        → INNER SIDE
                                             OF VEHICLE

## Description

## TECHNICAL FIELD

The present disclosure relates to a vehicle and a display device.

## BACKGROUND ART

A vehicle including a steering wheel, a center display module provided in front of the steering wheel, and a side display module provided on one side or both sides of the center display module in a vehicle width direction is known (see, for example, Japanese Patent No. 7306210). Further, Japanese Patent Laid-Open No. 2016-009240 discloses a tablet terminal including a touch panel in which a concave touch sensor indicating a place where the fingers are to be placed is provided on a rear surface of the tablet terminal. Japanese Patent Laid-Open No. 2007-164767 discloses a tablet terminal in which a concave portion that serves as a reference for a gripping position is provided on a side surface of the tablet terminal.

## SUMMARY OF INVENTION

## TECHNICAL PROBLEM

An object of the present disclosure is to provide a technique effective in improving operability of a vehicle user interface.

## SOLUTION TO PROBLEM

One aspect of the present disclosure is a vehicle. In one example, the vehicle in this case may include:

a first display module arranged in front of a steering wheel;
a second display module arranged on a vehicle rear side of the first display module on at least one side of the first display module in a vehicle width direction and including a touch panel; and
a guide portion provided on a rear surface of the second display module and configured to determine positions of one or more second fingers that are fingers other than a first finger that operates the touch panel and to be placed on the rear surface of the second display module.

One aspect of the present disclosure is a display device mounted on a vehicle. In one example, the display device in this case may include:

a first display module arranged in front of a steering wheel;
a second display module arranged on a vehicle rear side of the first display module on at least one side of the first display module in a vehicle width direction and including a touch panel; and
a guide portion provided on a rear surface of the second display module and configured to determine positions of one or more second fingers that are fingers other than a first finger that operates the touch panel and to be placed on the rear surface of the second display module.

## ADVANTAGEOUS EFFECTS OF INVENTION

According to the present disclosure, it is possible to provide a technique effective in improving operability of a vehicle user interface.

## BRIEF DESCRIPTION OF DRAWINGS

Fig. 1 is a view illustrating an example of layout of a vehicle interior of a vehicle.
Fig. 2 is a view illustrating an example of a schematic configuration of a display device and a periphery thereof.
Fig. 3 is a rear view illustrating an example of shapes of an inner display and an outer display in a first embodiment.
Fig. 4 is a view illustrating a cross section of the inner display taken along A-A' in Fig. 3.
Fig. 5 is a rear view illustrating another example of the shape of the inner display in the first embodiment.
Fig. 6 is a first view for explaining how the fingers are placed in a case where touch operation is performed on the inner display in the first embodiment.
Fig. 7 is a second view for explaining how the fingers are placed in a case where touch operation is performed on the inner display in the first embodiment.
Fig. 8 is a third view for explaining how the fingers are placed in a case where touch operation is performed on the inner display in the first embodiment.
Fig. 9 is a fourth view for explaining how the fingers are placed in a case where touch operation is performed on the inner display in the first embodiment.
Fig. 10 is a view illustrating an example of a cross-sectional shape of an inner guide portion in Modification 1 of the first embodiment.
Fig. 11 is a view for explaining how the fingers are placed in a case where touch operation is performed on an inner display in Modification 1 of the first embodiment.
Fig. 12 is a rear view illustrating an example of a shape of an inner display in Modification 2 of the first embodiment.
Fig. 13 is a view illustrating a cross section of the inner display taken along B-B' in Fig. 12.
Fig. 14 is a view illustrating another example of the cross-sectional shape of the inner guide portion.
Fig. 15 is a view for explaining how the fingers are placed in a case where touch operation is performed on the inner display in Modification 2 of the first embodiment.

Fig. 16 is a rear view illustrating another example of the shape of the inner display in Modification 2 of the first embodiment.

Fig. 17 is a view schematically illustrating an example of a hardware configuration of a vehicle in a second embodiment.

Fig. 18 is a cross-sectional view illustrating an example of a configuration of an inner display in the second embodiment.

Fig. 19 is a flowchart indicating an example of processing routine to be executed by an ECU by being triggered by detection of touch operation on the inner display (or an outer display) in the second embodiment.

## DESCRIPTION OF EMBODIMENTS

A vehicle according to the present disclosure includes a first display module arranged in front of a steering wheel, and a second display module arranged on at least one side of the first display module in a vehicle width direction (left and right direction of the vehicle) and arranged on a vehicle rear side of the first display module. In such a vehicle, the second display module can be constituted with a touch panel. This allows a driver of the vehicle to operate various kinds of equipment mounted on the vehicle and change display items on the first display module by performing touch operation on the touch panel of the second display module. Further, the second display module is arranged in the vicinity of the steering wheel, and thus, the driver of the vehicle can rapidly move the hand between the steering wheel and the second display module without largely changing a posture.

To accurately perform touch operation at a position to be operated on the touch panel of the second display module, a method is recommended in which the touch operation is performed at the position to be operated with the thumb in a state at least one finger other than the thumb is placed on a rear surface of the second display module. However, if a position of the finger placed on the rear surface of the second display module is unstable, a position of the thumb becomes also unstable, and it may be difficult to accurately perform touch operation at the position to be operated. Thus, a user interface that enables easy and accurate touch operation to be performed at a position to be operated is desired.

In response to the above-described request, in a vehicle that is one aspect of the present disclosure, a guide portion is provided on the rear surface of the second display module. The guide portion is configured to determine positions of one or more second fingers which are fingers other than a first finger that performs a touch operation on the touch panel of the second display module, and which are to be placed on the rear surface of the second display module. In such a vehicle, the driver of the vehicle is only required to place the one or more second fingers at the guide portion on the rear surface of the second display module when performing touch operation on the touch panel of the second display module. By this means, the positions of the second fingers are determined, so that the positions of the second fingers can be made stable. As a result, the position of the hand including the second fingers can be made stable. It is therefore possible to easily perform accurate operation at the position to be operated with the first finger.

Here, the guide portion in the vehicle that is one aspect of the present disclosure may include, in one example, a dent provide on the rear surface of the second display module. In this case, the positions of the second fingers can be made stable by the driver of the vehicle placing the one or more second fingers in the dent. Note that a predetermined wall surface of the dent may be formed with an inclined surface that bends such that an inclination angle becomes larger stepwise toward a bottom surface of the dent. The predetermined wall surface may be a wall surface located on a side of bases of the second fingers when the second fingers are placed in the dent among wall surfaces that surround the dent. According to such a configuration, the second fingers placed in the dent can be bent along the predetermined wall surface. This allows the driver of the vehicle to grip the predetermined wall surface with the second fingers or hook the second fingers on the predetermined wall surface. This can more reliably make the positions of the second fingers stable.

The guide portion in the vehicle that is one aspect of the present disclosure may, in another example, include two or more grooves provided on the rear surface of the second display module and extending in a vehicle width direction (width direction of the second display module). In this case, a position of each of the two or more second fingers can be determined by the driver of the vehicle placing the two or more second fingers respectively in the two or more grooves. This can make a position of the hand including the second fingers stable.

The guide portion in the vehicle that is one aspect of the present disclosure may be formed to continuously or intermittently extend in a vertical direction of the vehicle (vertical direction of the second display module). By this means, even if the positions at which the second fingers are placed change between a case where touch operation is performed at a position on an upper side in the vertical direction of the vehicle on the touch panel of the second display module and a case where touch operation is performed at a position on a lower side in the vertical direction of the vehicle on the touch panel of the second display module, the positions of the second fingers can be determined.

Note that the vehicle that is one aspect of the present disclosure may further include a determination module that determines whether the first finger that is operating the second display module is the thumb, and an output module that outputs a message that encourages operation on the second display module with the thumb in response to the determination module determining that the first finger is not the thumb. By this means, it is possible to encourage the driver of the vehicle to perform operation for accurately performing touch operation at the position to be operated of the second display module.

Here, in one example, the determination module may include a camera that captures an image of a vehicle interior and an electronic control unit (ECU). In this case, the ECU can determine whether or not the first finger is the thumb by performing image analysis on the image captured by the camera.

Further, in another example, the determination module may include a touch sensor provided in the guide portion and the ECU. In this case, the ECU determines whether the second fingers are placed at the guide portion through the touch sensor. In a case where the second fingers are placed at the guide portion, the first finger that is operating the second display module is less likely to be a finger other than the thumb, and thus, the ECU determines that the first finger is the thumb. Further, in a case where the second fingers are not placed at the guide portion, while there is a possibility that the first finger is the thumb, it is not recommended to operate the second display module in a state where the second fingers are not placed at the guide portion, and thus, an ECU 10 determines that the first finger is a finger other than the thumb.

Further, in the vehicle that is one aspect of the present disclosure, the second display module may be configured to display GUI components for operating game content displayed at the first display module. In other words, the second display module may be configured to function as a controller for operating the game content displayed at the first display module. In this case, the driver of the vehicle can accurately operate the game content by performing touch operation on the touch panel of the second display module with the first finger while placing the second fingers at the guide portion on the rear surface of the second display module. Note that display and operation of the game content may be allowed only in a case where the vehicle is stopped.

Note that the present disclosure can be grasped as a display device. The display device is in this case only required to include the first display module, the second display module, and the guide portion described above. In such a display device, the driver of the vehicle is only required to place the one or more second fingers at the guide portion on the rear surface of the second display module when performing touch operation on the second display module. By this means, the positions of the second fingers are determined, so that it is possible to make the position of the hand including the second fingers, that is, the position of the thumb of the hand stable. This results in making it possible to easily perform accurate operation at the position to be operated with the first finger.

Embodiments of the present disclosure will be described below based on the drawings. Configurations of the following embodiments are examples, and the present disclosure is not limited to the configurations of the embodiments. Further, the following embodiments can be combined wherever possible.

### <First Embodiment>

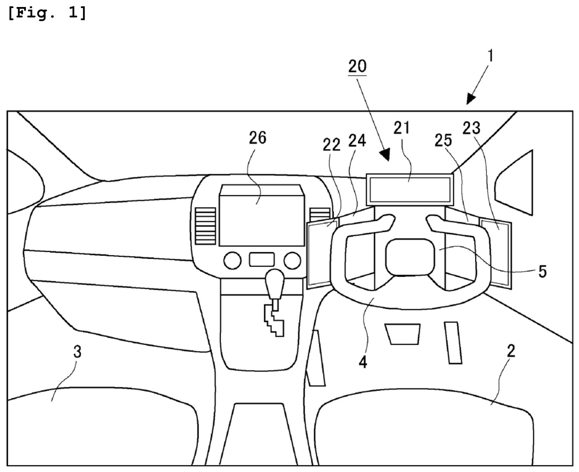

Fig. 1 is a view illustrating an example of layout of a vehicle interior of a vehicle 1. A driver's seat 2 and a passenger's seat 3 are provided in the vehicle interior of the vehicle 1. Note that the vehicle 1 of the first embodiment is a right-hand-drive vehicle, and the driver's seat 2 is provided on a right side in a traveling direction of the vehicle 1. A steering wheel 4 is disposed in front of the driver's seat 2. The steering wheel 4 may be a U-shaped steering wheel (so-called irregularly shaped steering wheel) or a circular steering wheel. The steering wheel 4 is connected to a steering device provided in the vehicle 1 via a steering column 5. The steering column 5 is covered with a column cover.

The passenger's seat 3 is provided on a left side of the driver's seat 2, and a center display 26 is disposed at a middle position between the driver's seat 2 and the passenger's seat 3 in a front portion of the vehicle. At the center display 26, for example, auxiliary information such as car navigation, content regarding entertainment such as audio and TV, or the like, is displayed.

A display device 20 is provided on a vehicle front side of the steering wheel 4. The display device 20 includes a meter display 21 located in front of the driver's seat 2, an inner display 22 located on a rear side of the meter display 21 in the vehicle 1 and on an inner side of the vehicle 1, an outer display 23 located on a rear side of the meter display 21 in the vehicle 1 and on an outer side of the vehicle 1, an inner bracket 24 that fixes the inner display 22 at the steering column 5, and an outer bracket 25 that fixes the outer display 23 at the steering column 5. Note that in the first embodiment, the meter display 21 corresponds to a "first display module" according to the present disclosure, and the inner display 22 and the outer display 23 correspond to a "second display module" according to the present disclosure.

Note that an outer side of the vehicle 1 refers to a side closer to the outside of the vehicle 1 as viewed from the driver's seat 2 and refers to a side of a door of the driver's seat 2. Further, an inner side of the vehicle 1 refers to a side of the passenger's seat 3 as viewed from the driver's seat 2 and refers to a side of a door of the passenger's seat 3. For example, in the vehicle 1 in which the steering wheel is provided in a right portion of the vehicle 1, the outer side of the vehicle 1 indicates the right portion of the vehicle 1, and the inner side of the vehicle 1 indicates a left portion of the vehicle 1. Further, for example, in the vehicle 1 in which the steering wheel 4 is provided in a left portion of the vehicle 1, the outer side of the vehicle 1 indicates the left portion of the vehicle 1, and the inner side of the vehicle 1 indicates the right portion of the vehicle 1. Note that in the vehicle 1 in which the steering wheel is arranged at the center of the vehicle interior, for example, the outer side and the inner side of the vehicle 1 may be arbitrarily determined.

All of the meter display 21, the inner display 22, and the outer display 23 in the first embodiment are displays including touch panels (touch panel displays). Note that it is only necessary that at least the inner display 22 or the outer display 23 includes the touch panels. As the touch panel, for example, a resistive touch panel that detects a pressure when a user depresses the panel, a capacitive touch panel that detects change in electrostatic capacitance when the user depresses the panel, or the like, can be employed. The display is, for example, a liquid crystal display (LCD), an electroluminescence (EL) panel, or the like.

**(Display Device)**

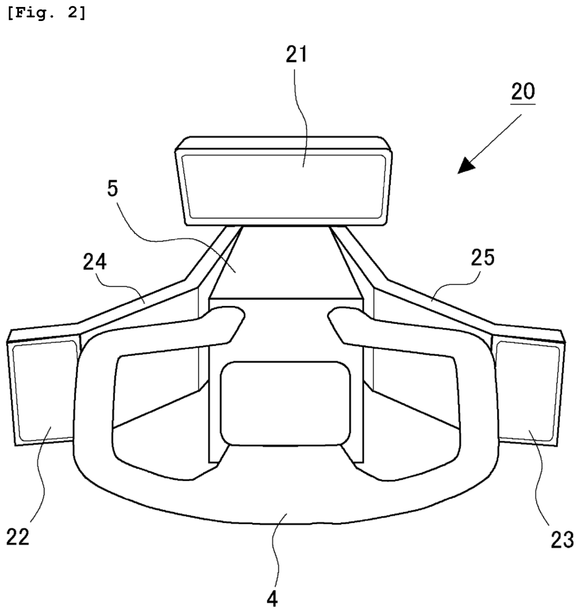

Fig. 2 is a view illustrating an example of a schematic configuration of the display device 20 and a periphery thereof. The display device 20 is fixed at the steering column 5. Note that the display device 20 may be fixed at an instrument panel. The meter display 21 is a horizontally elongated display and is attached at an upper portion of the steering column 5. In this event, the meter display 21 is attached at the upper portion of the steering column 5 such that the screen faces rearward of the vehicle and is parallel to a left and right direction (vehicle width direction) of the vehicle 1. Note that the meter display 21 may be arranged while being inclined in a front-back direction of the vehicle such that the screen faces slightly upward.

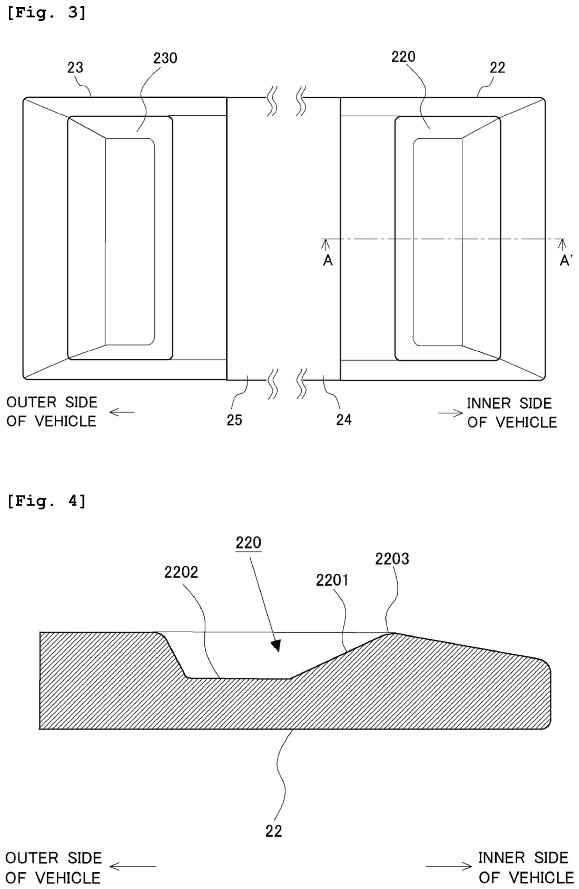

On a side surface on the inner side of the vehicle (left side in Fig. 3) of the steering column 5, an inner bracket 24 is attached. The inner bracket 24 is a support member extending from the side surface on the inner side of the vehicle of the steering column 5 toward a rear side of the vehicle and an inner side of the vehicle. At a tip portion (an end portion on the rear side of the vehicle and the inner side of the vehicle) of the inner bracket 24, the inner display 22 is supported. The inner display 22 is a vertically elongated display extending from the tip portion of the inner bracket 24 toward the rear side of the vehicle 1 and the inner side of the vehicle 1. Note that the inner bracket 24 is configured to bend or be curved inward of the vehicle as it extends from the front portion of the vehicle toward the rear portion of the vehicle.

On a side surface on the outer side of the vehicle (right side in Fig. 3) of the steering column 5, an outer bracket 25 is attached. The outer bracket 25 is a member extending from the side surface on the outer side of the vehicle of the steering column 5 toward the rear side of the vehicle and the outer side of the vehicle. The outer display 23 is supported at a tip portion (an end portion on the rear side of the vehicle and the outer side of the vehicle) of the outer bracket 25. The outer display 23 is a vertically elongated display extending from the tip portion of the outer bracket 25 toward the rear side of the vehicle and the outer side of the vehicle. Note that the outer bracket 25 is configured to bend or be curved outward of the vehicle as it extends from the front portion of the vehicle toward the rear portion of the vehicle.

In this manner, the inner bracket 24 and the outer bracket 25 have a shape of extending from the side surfaces of the steering column 5 toward the rear side of the vehicle and bending or being curved so as to expand in the vehicle width direction (left and right direction of the vehicle) in the middle. By this means, the inner display 22 and the outer display 23 can be arranged in the vicinity of gripping portions of the steering wheel 4.

Further, as illustrated in Fig. 2, the inner bracket 24 and the outer bracket 25 in the first embodiment are configured such that each of the inner display 22 and the outer display 23 has an angle in the left and right direction of the steering wheel 4 and is inclined toward the steering wheel 4. By this means, the inner display 22 and the outer display 23 are arranged such that the inner display 22 protrudes more rearward of the vehicle 1 as it extends inward of the vehicle 1, and the outer display 23 protrudes more rearward of the vehicle 1 as it extends outward of the vehicle 1. This results in making it possible to arrange the screens of the inner display 22 and the outer display 23 so as to face the driver's seat 2 of the vehicle 1 (driver of the vehicle 1).

In one example, the meter display 21 displays information necessary for traveling of the vehicle 1 such as a speed of the vehicle 1, an engine rotation speed (in a case where the vehicle 1 includes an engine), a charging and discharging condition (in a case where the vehicle 1 includes a battery for driving), a traveling distance, and a state of an ADAS.

In one example, the inner display 22 displays information regarding convenience of occupants of the vehicle 1 as content. The information regarding convenience of the occupants may include information for providing entertainment to the occupants and/or information related to comfortability of the occupants, and the like. The content of the information regarding convenience of the occupants may include, in one example, GUI components (for example, GUI components such as a switch and a button to operate equipment to be operated) for performing operation of audio, operation of a navigation device, operation of an air conditioner, operation of a phone, operation of a clock, operation of a voice assistant, and the like, operating conditions of the equipment to be operated, and the like.

In one example, the outer display 23 displays information regarding control of the vehicle 1 as content. The information regarding control of the vehicle 1 may include information regarding traveling of the vehicle 1. The content of the information regarding control of the vehicle 1 may include, in one example, GUI components (for example, GUI components such as, for example, a switch and a button for operating equipment to be operated) for performing operation of a headlight, operation of a wiper, operation of a sideview mirror, operation of the ADAS, operation of a drive mode, operation of a vehicle height, operation of a position of the steering wheel, operation of a seat position, and the like, operating conditions of the equipment to be operated, and the like.

Note that information to be displayed at the inner display 22 and the outer display 23 is not limited to the above. Further, the inner display 22 may display the information regarding control of the vehicle 1, and the outer display 23 may display the information regarding convenience of the occupants of the vehicle 1. Further, the information to be displayed at the inner display 22 and the outer display 23 can be arbitrarily determined.

**(Inner Display, Outer Display)**

Here, configurations of the inner display 22 and the outer display 23 in the first embodiment will be described. Fig. 3 is a rear view illustrating an example of shapes of the inner display 22 and the outer display 23.

On a rear surface of the inner display 22 and a rear surface of the outer display 23 in the first embodiment, an inner guide portion 220 and an outer guide portion 230 are respectively provided. The inner guide portion 220 and the outer guide portion 230 are portions at which the driver of the vehicle 1 places at least one of the fingers (the index finger, the middle finger, the ring finger, the little finger) other than the thumb when performing touch operation on the inner display 22 and the outer display 23, and are provided for determining a position of the placed finger.

The inner guide portion 220 and the outer guide portion 230 will be described in detail below. Note that configurations of the inner guide portion 220 and the outer guide portion 230 are similar except arrangement in the vehicle width direction is opposite (left and right reversed), and thus, the configuration of the inner guide portion 220 will be described, and description of the outer guide portion 230 will be omitted here.

Fig. 4 is a view illustrating a cross section of the inner display 22 taken along A-A' in Fig. 3. As illustrated in Fig. 4, the inner guide portion 220 in the first embodiment is constituted with a dent that is formed in part of the rear surface of the inner display 22. In one example, such an inner guide portion 220 is formed in a vertically elongated substantially rectangular shape having a length in a vertical direction of the vehicle (vertical direction in Fig. 3) longer than a length in the vehicle width direction (left and right direction in Fig. 3) in plan view as illustrated in Fig. 3. In this event, the length of the inner guide portion 220 in the vertical direction of the vehicle may be made as long as possible. However, the shape of the inner guide portion 220 is not limited to a rectangular shape as long as the shape is a vertically elongated shape.

Further, in the inner guide portion 220 in the first embodiment, as illustrated in Fig. 4, a wall surface 2201 on the inner side of the vehicle is constituted with an inclined surface that projects to the outer side of the vehicle toward a bottom surface 2202. In other words, the wall surface 2201 on the inner side of the vehicle is formed such that an angle of a corner portion 2203 that serves as a join of the wall surface 2201 and the rear surface of the inner display 22 (angle formed by the wall surface 2201 and the rear surface of the inner display 22) becomes obtuse. In this event, an inclination angle of the wall surface 2201 on the inner side of the vehicle (angle of the corner portion 2203) may be changed as appropriate in accordance with easiness for placing the fingers, easiness for making positions where the fingers are placed stable, and the like.

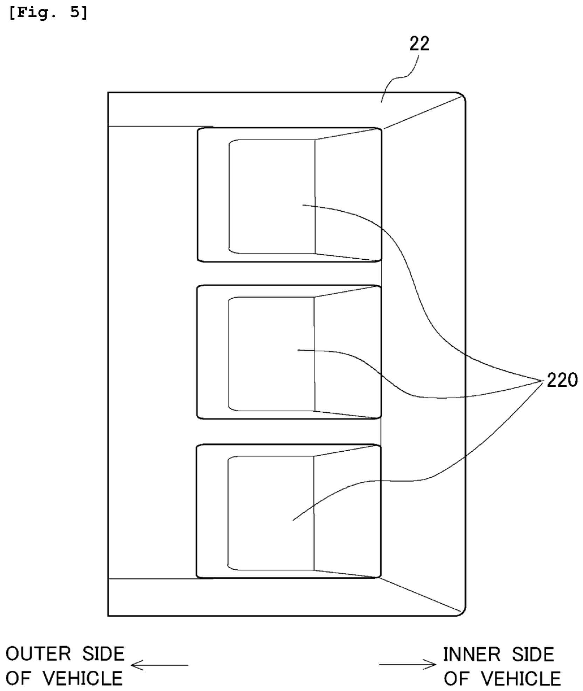

Note that while in the example illustrated in Fig. 3 and Fig. 4, the inner guide portion 220 is constituted with one dent continuously extending in the vertical direction of the vehicle, as illustrated in Fig. 5, the inner guide portion 220 may be constituted with a plurality of dents intermittently extending in the vertical direction of the vehicle.

**(Operation and Effects of First Embodiment)**

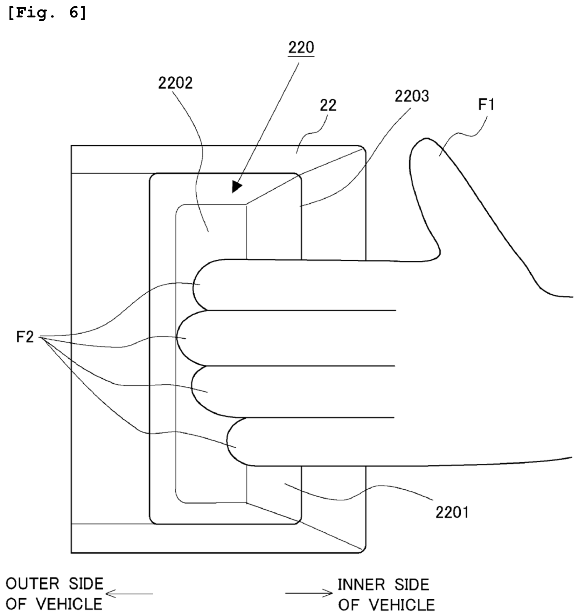

In the vehicle 1 in the first embodiment, in a case where the driver performs touch operation on the screen of the inner display 22, as illustrated in Fig. 6, the driver can perform touch operation on the screen of the inner display 22 with the thumb F1 of the left hand while placing at least one of the fingers F2 other than the thumb F1 of the left hand at the inner guide portion 220 (in the dent). In this case, the thumb F1 of the left hand corresponds to a "first finger" according to the present disclosure, and the fingers F2 other than the thumb F1 of the left hand and to be placed in the dent of the inner guide portion 220 correspond to "second fingers" according to the present disclosure. By this means, positions of the fingers F2 placed on the rear surface of the inner display 22 are determined by the inner guide portion 220.

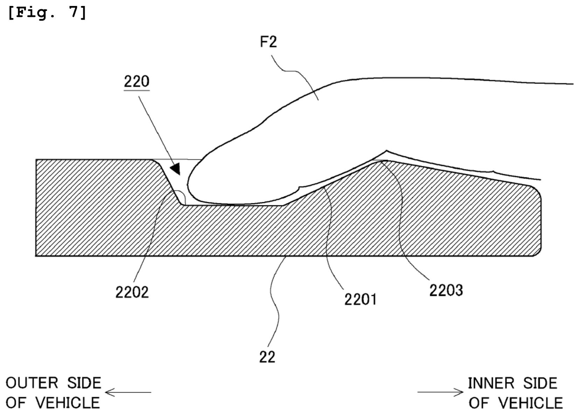

Further, as illustrated in Fig. 4, the wall surface 2201 on the inner side of the vehicle of the inner guide portion 220 in the first embodiment is constituted with an inclined surface. This allows the driver to bend the fingers F2 placed on the rear surface of the inner display 22 along the corner portion 2203 as illustrated in Fig. 7. As a result, even if the driver moves the thumb F1 of the left hand, the position of the left hand is stable.

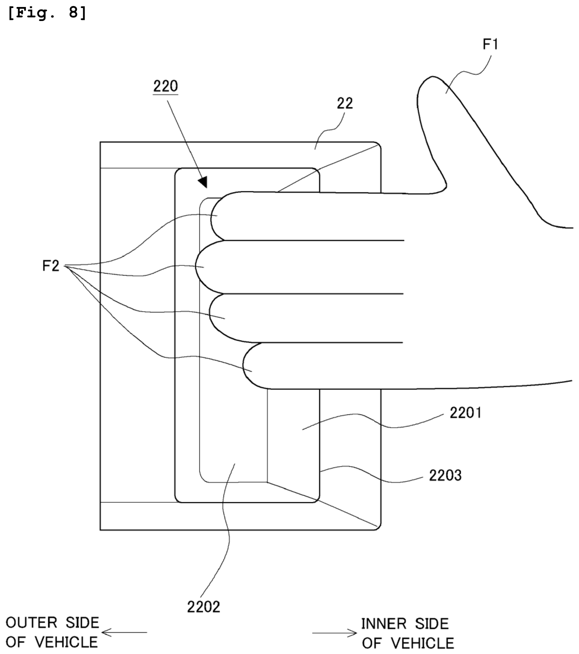

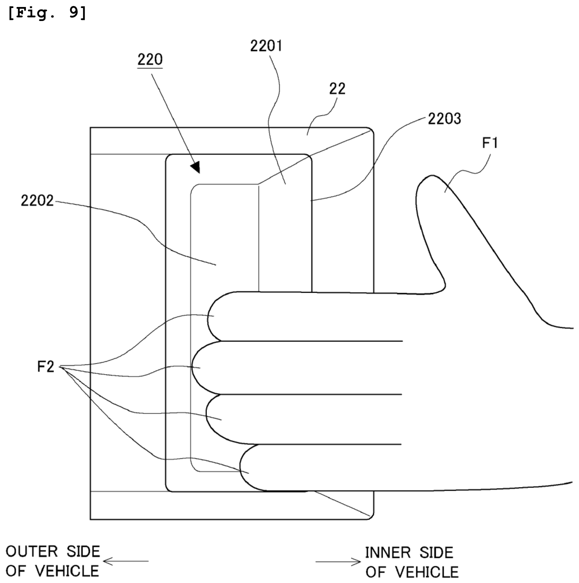

Further, as illustrated in Fig. 3, the inner guide portion 220 in the present embodiment is constituted with a vertically elongated dent extending in the vertical direction of the vehicle. By this means, in a case where the driver performs touch operation at a position on an upper side in the vertical direction of the vehicle (upper side in the vertical direction of the inner display 22) on the screen of the inner display 22, as illustrated in Fig. 8, by the driver placing the fingers F2 other than the thumb F1 of the left hand at a portion on the upper side in the vertical direction of the vehicle in the inner guide portion 220, the position of the left can be made stable. Further, in a case where the driver performs touch operation at a position on a lower side in the vertical direction of the vehicle (lower side in the vertical direction of the inner display 22) on the screen of the inner display 22, as illustrated in Fig. 9, by the driver placing the fingers F2 other than the thumb F1 of the left hand at a portion on the lower side in the vertical direction of the vehicle in the inner guide portion 220, the position of the left hand can be made stable.

Thus, the driver can accurately perform touch operation at a position to be operated on the screen of the inner display 22 with the thumb F1 of the left hand.

Further, in the display device 20 in the first embodiment, in a case where the driver of the vehicle 1 performs touch operation on the screen of the outer display 23, the driver of the vehicle 1 can perform touch operation on the screen of the outer display 23 with the thumb F1 while placing at least one of the fingers F2 other than the thumb F1 of the right hand at the outer guide portion 230. In this case, the thumb F1 of the right hand corresponds to a "first finger" according to the present disclosure, and the fingers F2 other than the thumb F1 of the right hand and to be placed in the dent of the outer guide portion 230 correspond to "second fingers" according to the present disclosure. By this means, the positions of the fingers F2 placed on the rear surface of the outer display 23 are determined by the outer guide portion 230.

Further, a wall surface on the outer side of the vehicle of the outer guide portion 230 in the first embodiment is formed with an inclined surface in a similar manner to the wall surface 2201 on the inner side of the vehicle of the inner guide portion 220. This allows the driver to bend the fingers F2 placed on the rear surface of the outer display 23 along the corner portion that serves as a join of the wall surface and the rear surface of the outer display 23. As a result, even if the driver moves the thumb F1 of the right hand, the position of the right hand is stable.

Further, the outer guide portion 230 in the first embodiment is constituted with a vertically elongated dent extending in the vertical direction of the vehicle in a similar manner to the inner guide portion 220. By this means, even in a case where the driver performs touch operation at a position on an upper side in the vertical direction of the vehicle on the screen of the outer display 23, and in a case where the driver performs touch operation at a position on a lower side in the vertical direction of the vehicle on the screen of the outer display 23, the position of the right hand can be made stable.

Thus, the driver can accurately perform touch operation at the position to be operated on the screen of the outer display 23 with the thumb F1 of the right hand.

Thus, according to the first embodiment, it is possible to provide a user interface that enables easy and accurate touch operation to be performed at a position to be operated on the screen of the inner display 22 and the outer display 23.

**(Modification 1 of First Embodiment)**

While in the first embodiment described above, an example has been described where the wall surface 2201 on the inner side of the vehicle in the inner guide portion 220 is formed with a planar inclined surface, the wall surface 2201 on inner side of the vehicle may be formed with a bent inclined surface.

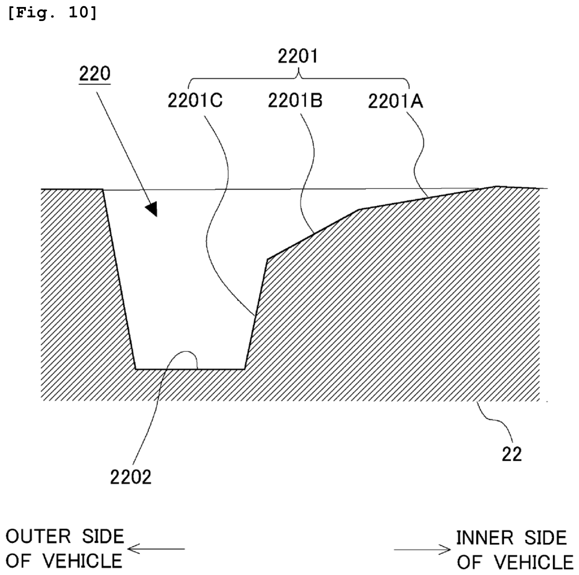

Fig. 10 is a view illustrating an example of a cross-sectional shape of the inner guide portion 220 in Modification 1 of the first embodiment. Note that a cut end of the cross section illustrated in Fig. 10 is similar to that in Fig. 4 described above (corresponds to A-A' in Fig. 3). In the inner guide portion 220 in the present modification, the wall surface 2201 on the inner side of the vehicle is formed with an inclined surface that bends such that an inclination angle becomes larger stepwise toward the bottom surface 2202. In other words, the wall surface 2201 on the inner side of the vehicle in the inner guide portion 220 is formed with an inclined surface that bends such that the inclination angle becomes larger stepwise as it extends from the inner side of the vehicle toward the outer side of the vehicle in the vehicle width direction. In the example illustrated in Fig. 10, the wall surface 2201 on the inner side of the vehicle includes three inclined surfaces 2201A to 2201C. In the following description, the inclined surface 2201A located on the rear surface side of the inner display 22 (at a position most separate from the bottom surface 2202) will be referred to as a first inclined surface 2201A, the inclined surface 2201C located on the front surface side of the inner display 22 (at a position closest to the bottom surface 2202) will be referred to as a third inclined surface 2201C, and the inclined surface 2201B between the first inclined surface 2201A and the third inclined surface 2201C will be referred to as a second inclined surface 2201B.

Here, in a case where an inclination angle of the first inclined surface 2201A is defined as $\alpha$, an inclination angle of the second inclined surface 2201B is defined as $\beta$, and an inclination angle of the third inclined surface 2201C is defined as $\gamma$, the following inequality (1) holds among the three inclined surfaces 2201A to 2201C.

$$\alpha < \beta < \gamma \ \ldots \ (1)$$

Note that the inclination angle and dimension of each of the first inclined surface 2201A, the second inclined surface 2201B, and the third inclined surface 2201C may be changed as appropriate in accordance with embodiments, and the like, as long as the above-described inequality (1) is satisfied. In one example, the inclination angle and dimension of each of the first inclined surface 2201A, the second inclined surface 2201B, and the third inclined surface 2201C may be determined in accordance with lengths of the fingers of adults that are statistically collected (length of a specific finger among the index finger, the middle finger, the ring finger, and the little finger). In this event, the inclination angle and dimension of each of the first inclined surface 2201A, the second inclined surface 2201B, and the third inclined surface 2201C may be determined in accordance with an average value of the lengths of the fingers of the adults that are statistically collected. Alternatively, the inclination angle and dimension of each of the first inclined surface 2201A, the second inclined surface 2201B, and the third inclined surface 2201C may be determined in accordance with a minimum value of the lengths of the fingers of the adults that are statistically collected.

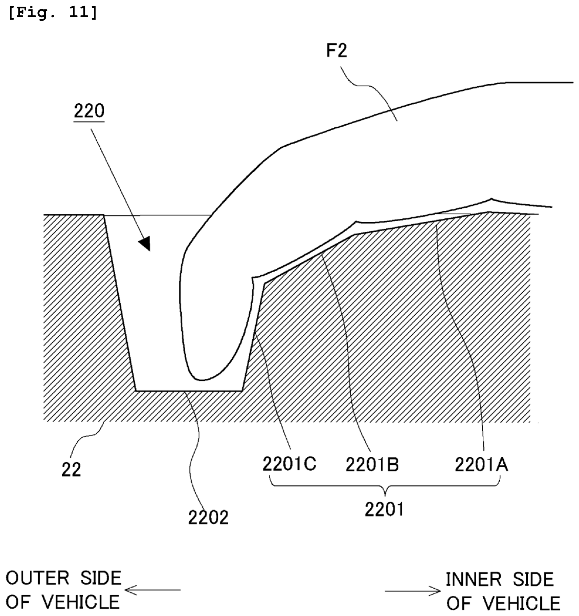

According to the inner guide portion 220 of the present modification, as illustrated in Fig. 11, the driver can bend the first joint of the finger F2 to be placed at the inner guide portion 220 along the corner portion of the join between the second inclined surface 2201B and the third inclined surface 2201C, bend the second joint along the corner portion of the join between the second inclined surface 2201B and the first inclined surface 2201A, and bend the third joint along the corner portion of the join between the first inclined surface 2201A and the rear surface of the inner display 22. This allows the driver to grip the wall surface 2201 with the fingers F2 placed on the inner guide portion 220 or hook the fingers F2 placed on the inner guide portion 220 on the wall surface 2201 when performing touch operation on the screen of the inner display 22. As a result, the position of the left hand can be made more stable.

Note that a configuration of the outer guide portion 230 in the present modification may be similar to the configuration of the inner guide portion 220 illustrated in Fig. 10. In other words, the wall surface on the outer side of the vehicle in the outer guide portion 230 is only required to be formed with an inclined surface that bends such that the inclination angle becomes larger stepwise toward the bottom surface. In other words, the wall surface on the outer side of the vehicle in the outer guide portion 230 is only required to be formed with an inclined surface that bends such that the inclination angle becomes larger stepwise as it extends from the outer side of the vehicle toward the inner side of the vehicle in the vehicle width direction. By this means, the driver can grip the wall surface on the outer side of the vehicle with the fingers F2 placed on the outer guide portion 230 or hook the fingers F2 placed on the outer guide portion 230 on the wall surface on the outer side of the vehicle when performing touch operation on the screen of the outer display 23. As a result, the position of the right hand can be made more stable.

**(Modification 2 of First Embodiment)**

While in the first embodiment described above, an example has been described where the inner guide portion 220 is constituted with one dent, the inner guide portion 220 may be constituted with a plurality of grooves.

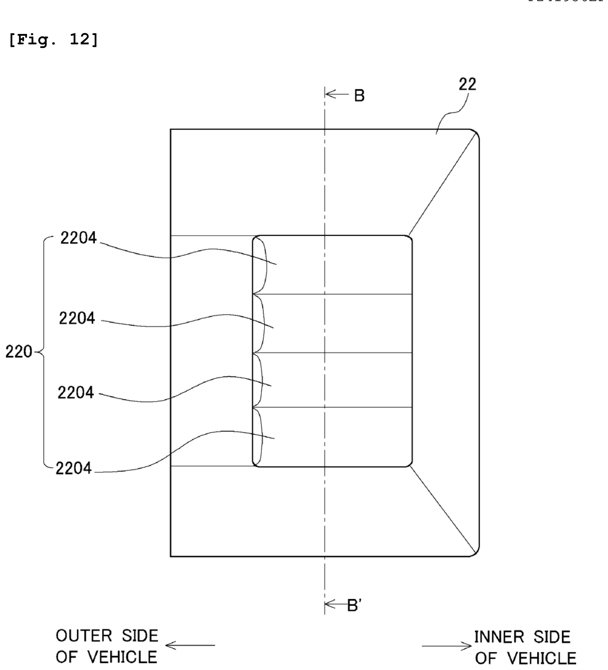

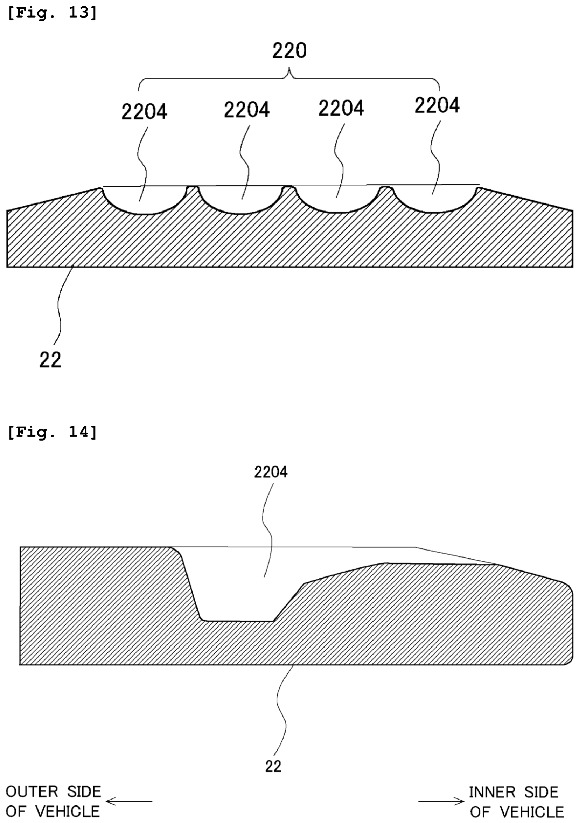

Fig. 12 is a rear view illustrating an example of a shape of the inner display 22 in Modification 2 of the first embodiment. Fig. 13 is a view illustrating a cross section of the inner display 22 taken along B-B' in Fig. 12. Fig. 14 is a view illustrating another example of a cross-sectional shape of the inner guide portion. Note that a cut end of the cross section illustrated in Fig. 14 is similar to that in Fig. 4 described above (corresponds to A-A' in Fig. 3).

In part of the rear surface of the inner display 22 of the present modification, the inner guide portion 220 is constituted with a plurality of grooves 2204 extending in the vehicle width direction (left and right direction of the inner display 22). Note that while a depth of each groove 2204 may be uniform in the vehicle width direction as illustrated in Fig. 12 and Fig. 13, each groove 2204 may be deeper stepwise from the inner side of the vehicle toward the outer side of the vehicle as illustrated in Fig. 14. Further, in one example, a width of the groove 2204 in the vertical direction of the vehicle may be determined in accordance with thicknesses of the fingers (thicknesses of the index finger, the middle finger, the ring finger, and the little finger) of adults that are statistically collected. In this event, the width of the groove 2204 in the vertical direction of the vehicle may be determined in accordance with an average value of the thicknesses of the fingers of adults that are statistically collected. Further, the width of the groove 2204 in the vertical direction of the vehicle may be determined in accordance with a maximum value of the thicknesses of the fingers of the adults that are statistically collected. Note that the width may be determined so as to be the same among the plurality of grooves 2204 or may be determined so as to be different from each other among the plurality of grooves 2204.

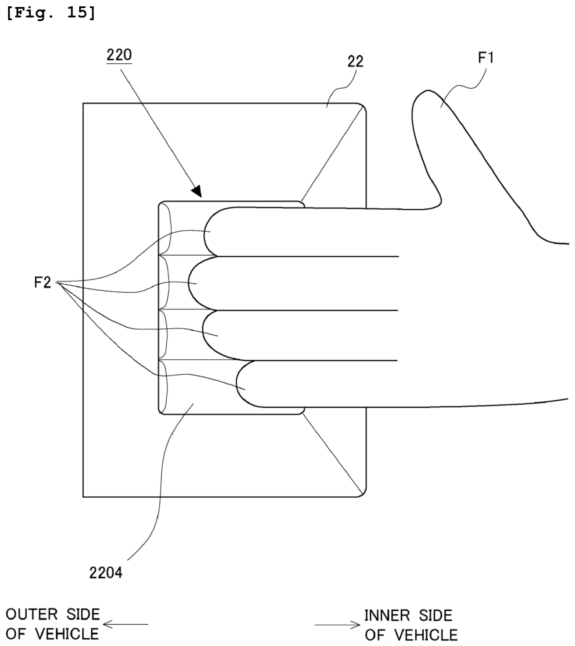

In a case where the inner guide portion 220 is constituted as described above, in a case where the driver performs touch operation on the screen of the inner display 22, as illustrated in Fig. 15, the driver can place at least two or more fingers F2 among the fingers F2 other than the thumb F1 of the left hand individually at two or more grooves 2204 of the inner guide portion 220. In this case, the positions of the two or more fingers F2 placed at the inner guide portion 220 are individually determined, so that the position of the left hand can be made stable. In particular, the position of the left hand in the vertical direction of the vehicle can be made stable.

Further, as illustrated in Fig. 14, in a case where the depth of the groove 2204 is constituted so as to be deeper stepwise from the inner side of the vehicle toward the outer side of the vehicle, the driver can grip the groove 2204 of the inner guide portion 220 with each finger F2 placed at the inner guide portion 220 or hook each finger F2 at the groove 2204 of the inner guide portion 220. This can more reliably make the position of the left hand stable.

Note that a configuration of the outer guide portion 230 in the present modification may be similar to the configuration of the inner guide portion 220. In this event, the outer display 23 is only required to have a configuration in which arrangement of the respective portions of the outer guide portion 230 is opposite (left and right reversed) to arrangement of the respective portions of the inner guide portion 220 in the vehicle width direction. This allows the driver to place at least two or more fingers F2 among the fingers F2 other than the thumb F1 of the right hand individually at two or more grooves of the outer guide portion 230 when performing touch operation on the screen of the outer display 23. In this case, the positions of the two or more fingers F2 placed on the outer display 23 are individually determined, so that the position of the right hand can be made stable. In particular, the position of the right hand in the vertical direction of the vehicle can be made stable.

Further, in a case where the groove of the outer guide portion 230 is constituted in a similar manner to the groove 2204 of the inner guide portion 220 illustrated in Fig. 14, the driver can grip the groove of the outer guide portion 230 with each finger F2 placed at the outer guide portion 230 or hook each finger F2 at the groove of the outer guide portion 230. This can more reliably make the position of the right hand stable.

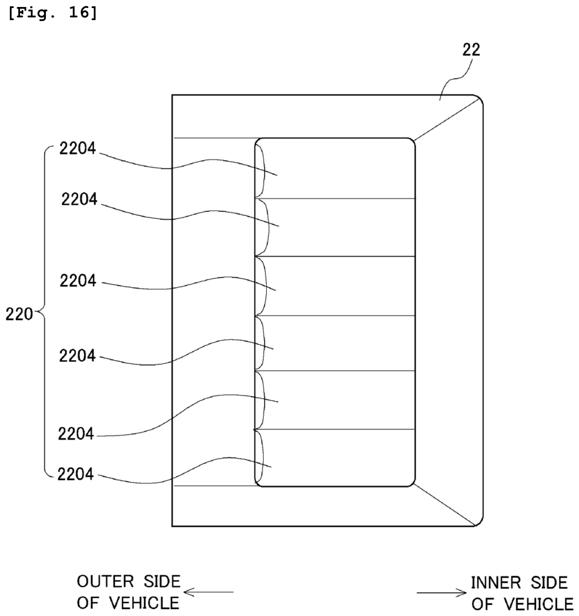

Note that while in the example illustrated in Fig. 12, four grooves 2204 are provided near the center of the inner display 22 in the vertical direction of the vehicle, as illustrated in Fig. 16, five or more grooves 2204 may be provided from the vicinity of an upper end to the vicinity of a lower end of the inner display 22 in the vertical direction of the vehicle. According to such a configuration, even if the positions of the fingers F2 placed on the rear surface of the inner display 22 change between a case where the driver performs touch operation at a position on the upper side in the vertical direction of the vehicle on the screen of the inner display 22 and a case where the driver performs touch operation at a position on the lower side in the vertical direction of the vehicle on the screen of the inner display 22, the positions of the fingers F2 can be determined by the grooves 2204. Note that the configuration illustrated in Fig. 16 may be applied to the outer guide portion 230.

**<Second Embodiment>**

A second embodiment of the present disclosure will be described next. Here, a configuration different from that in the first embodiment described above will be described, and description of a configuration similar to that in the first embodiment described above will be omitted. The second embodiment is different from the first embodiment described above in that a function for encouraging the driver to perform touch operation with the thumb F1 in a case where it is estimated that the driver performs touch operation on the inner display 22 or the outer display 23 with the fingers F2 other than the thumb F1, is mounted on the vehicle 1.

**(Hardware Configuration of Vehicle)**

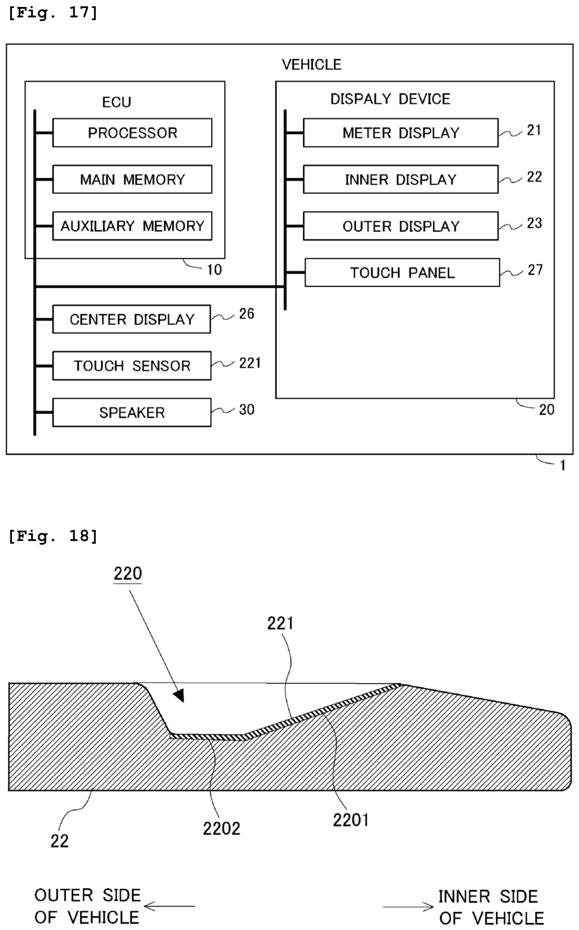

Fig. 17 is a view schematically illustrating an example of a hardware configuration of the vehicle 1. The vehicle 1 includes the ECU 10, the display device 20, the center display 26, a touch sensor 221, a speaker 30, and the like. The ECU 10 can be constituted as a computer including a processor (such as a CPU and a GPU), a main memory (such as a RAM and a ROM), and an auxiliary memory (such as an EPROM, a hard disk drive, and a removable medium). In the auxiliary memory, an operating system (OS), various kinds of programs, data to be used by various kinds of programs, data of a guidance message which will be described later, and the like, are stored. The ECU 10 implements each function matching a predetermined purpose as will be described later by the processor executing the program in the auxiliary memory. However, some or all of the functions may be, for example, implemented by a hardware circuit such as an application specific integrated circuit (ASIC) or a field programmable gate array (FPGA) as a hardware module. To the ECU 10, the display device 20, the center display 26, the touch sensor 221, the speaker 30, and the like, are connected.

The display device 20 includes the meter display 21, the inner display 22, the outer display 23, and a touch panel 27. The touch panel 27 is arranged on at least the inner display 22 and the outer display 23 among the meter display 21, the inner display 22, and the outer display 23. The touch panel 27 detects touch operation performed on each of the inner display 22 and the outer display 23.

The touch sensor 221 is a sensor that detects that the fingers are placed on the inner guide portion 220 and the outer display 23. Here, one example of the touch sensor 221 will be described based on Fig. 18. Fig. 18 is a cross-sectional view illustrating an example of a configuration of the inner display 22 in the second embodiment. A cut end of the cross section illustrated in Fig. 18 is similar to that in Fig. 4 described above (corresponds to A-A' in Fig. 3). Note that while the touch sensor 221 provided on the inner display 22 will be described here, the touch sensor 221 is also provided on the outer display 23 in a similar manner to the inner display 22.

In the inner display 22 in the second embodiment, a film touch sensor 221 is provided on the wall surface 2201 on the inner side of the vehicle and the bottom surface 2202 in the inner guide portion 220. As the touch sensor 221, a known sensor such as a resistive sensor or a capacitive sensor can be used. In one example, the touch sensor 221 may be configured to output an ON signal (for example "1") when the finger of the driver touches the touch sensor 221, and output an OFF signal (for example, "0") when the finger of the driver does not touch the touch sensor 221.

Note that while in the example illustrated in Fig. 18, the touch sensor 221 is provided on the wall surface 2201 on the inner side of the vehicle and the bottom surface 2202 in the inner guide portion 220, the touch sensor 221 may be provided on only one of the wall surface 2201 on the inner side of the vehicle or the bottom surface 2202, or the touch sensor 221 may be provided on the entire region (all wall surfaces including the wall surface 2201 on the inner side of the vehicle and the bottom surface 2202) of the inner guide portion 220.

Here, description will return to description of Fig. 17. The speaker 30 is provided in the vehicle interior of the vehicle 1 and outputs speech data. The speaker 30 may be, in one example, arranged at the instrument panel. However, the speaker 30 may be arranged at a portion other than the instrument panel (such as, for example, a roof lining or a door lining) as long as the driver of the vehicle 1 can hear speech data output from the speaker 30.

Note that the sensor connected to the ECU 10 is not limited to the touch sensor 221 and can include a vehicle speed sensor, an acceleration sensor, an accelerator position sensor, a crank position sensor, a brake stroke sensor, a steering angle sensor, a yaw rate sensor, an indicator switch, a shift position sensor, a position sensor (GPS sensor), an outside air temperature sensor, a room temperature sensor, a sensor for the ADAS, and the like.

Further, equipment to be connected to the ECU 10 is not limited to the speaker 30 and can include an air conditioner, a navigation device, an audio device, a phone, a wiper, a headlight, a sideview mirror, a powered seat, a voice assistant, and the like. Further, the equipment to be connected to the ECU 10 can include equipment regarding traveling of the vehicle 1 (such as, for example, a fuel injection valve, an ignition plug, an actuator of a transmission, an actuator of an anti-lock brake system (ABS), and an actuator of power steering).

In the vehicle 1 configured as described above, when the touch panel 27 detects touch operation on the inner display 22 or the outer display 23 by the driver, the ECU 10 determines whether the finger that is performing touch operation on the inner display 22 or the outer display 23 is the thumb F1 through the touch sensor 221. In a case where it is determined that the finger that is performing touch operation on the inner display 22 or the outer display 23 is the finger F2 other than the thumb F1, the ECU 10 outputs a guidance message from the speaker 30. The guidance message is a speech message for encouraging operation on the inner display 22 or the outer display 23 with the thumb F1. In one example, the guidance message may be speech that encourages the driver to place the fingers F2 other than the thumb F1 at the inner guide portion 220 or the outer guide portion 230 and perform touch operation on the inner display 22 or the outer display 23 with the thumb F1. Note that the guidance message may be displayed at the center display 26 or the meter display 21 as character data. Further, the guidance message may be output as both speech data and character data. Data of the guidance message as described above is stored in advance in the auxiliary memory of the ECU 10.

Note that in the second embodiment, a combination of the ECU 10 and the touch sensor 221 corresponds to a "determination module" according to the present disclosure.

**(Operation of ECU)**

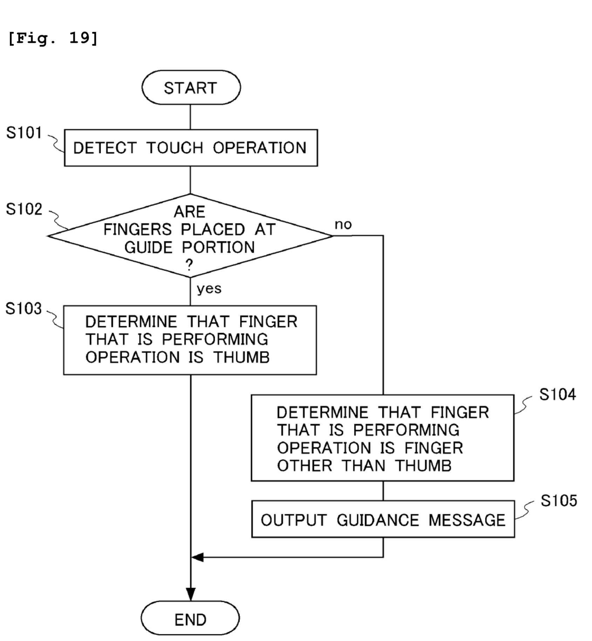

Operation of the ECU 10 will be described next based on Fig. 19. Fig. 19 is a flowchart indicating an example of processing routine to be executed by the ECU 10 by being triggered by detection of touch operation on the inner display 22 (or the outer display 23).

If the touch panel 27 of the inner display 22 (or the outer display 23) detects touch operation, a signal is transmitted from the touch panel 27 to the ECU 10. The ECU 10 detects touch operation on the inner display 22 (or the outer display 23) in accordance with the signal (step 101). If execution of the processing in step 101 ends, the ECU 10 executes processing in step 102.

In step 102, the ECU 10 determines whether the fingers are placed on the inner guide portion 220 (or the outer guide portion 230). Specifically, the ECU 10 determines whether the signal output from the touch sensor 221 of the inner guide portion 220 (or the outer guide portion 230) is an ON signal or an OFF signal. Here, in a case where the signal output from the touch sensor 221 is an ON signal, the ECU 10 determines that the fingers are placed on the inner guide portion 220 (or the outer guide portion 230). On the other hand, in a case where the signal output from the touch sensor 221 is an OFF signal, the ECU 10 determines that the fingers are not placed on the inner guide portion 220 (or the outer guide portion 230).

In a case where it is determined that the fingers are placed on the inner guide portion 220 (or the outer guide portion 230) (positive determination in step 102), the ECU 10 executes processing in step 103. In step 103, the ECU 10 determines that the finger that is performing touch operation on the inner display 22 (or the outer display 23) is the thumb F1. This is because a possibility that the driver seated on the driver's seat 2 performs touch operation on the inner display 22 (or the outer display 23) with the fingers F2 other than the thumb F1 while placing the thumb F1 at the inner guide portion 220 (or the outer guide portion 230) is extremely low. After execution of the processing in step 103 ends, the ECU 10 ends execution of the processing routine in Fig. 19.

Further, in a case where it is determined that the fingers are not placed at the inner guide portion 220 (or the outer guide portion 230) (negative determination in step 102), the ECU 10 executes processing in step 104. In step 104, the ECU 10 determines that the finger that is performing touch operation on the inner display 22 (or the outer display 23) is a finger other than the thumb F1. This is because in a case where the fingers are not placed at the inner guide portion 220 (or the outer guide portion 230), although there is a possibility that the finger that is operating the inner display 22 (or the outer display 23) may be the thumb F1, operation of the inner display 22 (or the outer display 23) in a state where the fingers F2 other than the thumb F1 are not placed at the inner guide portion 220 (or the outer guide portion 230) is not recommended. After execution of the processing in step 104 ends, the ECU 10 executes processing in step 105.

In step 105, the ECU 10 outputs the guidance message from the speaker 30. Specifically, the ECU 10 reads speech data of the guidance message stored in the auxiliary memory and outputs the read speech data from the speaker 30. As described above, the guidance message may be speech that encourages the driver to place the fingers F2 other than the thumb F1 at the inner guide portion 220 or the outer guide portion 230 and perform touch operation on the inner display 22 or the outer display 23 with the thumb F1. If execution of the processing in step 105 ends, the ECU 10 ends execution of the processing routine in Fig. 19.

**(Operation and Effects of Second Embodiment)**

In the vehicle 1 in the second embodiment, in a case where the driver operates the inner display 22 (or the outer display 23) without placing the fingers F2 other than the thumb F1 at the inner guide portion 220 (or the outer guide portion 230), the guidance message is output from the speaker 30. By this means, it is possible to encourage the driver to operate the inner display 22 (or the outer display 23) with the thumb F1 while placing the fingers F2 other than the thumb F1 at the inner guide portion 220 (or the outer guide portion 230). The driver who has received a notification of the guidance message can accurately perform touch operation at the position to be operated on the screen of the inner display 22 (or the outer display 23) by operating the inner display 22 (or the outer display 23) with the thumb F1 while placing the fingers F2 other than the thumb F1 at the inner guide portion 220 (or the outer guide portion 230).

**(Modification of Second Embodiment)**

While in the second embodiment described above, a combination of the ECU 10 and the touch sensor 221 is exemplified as the "determination module" according to the present disclosure, the "determination module" according to the present disclosure may be implemented by a combination of the ECU 10 and a camera. The camera in this case may be a dedicated camera or may be other cameras (such as, for example, a camera for drive recorder, or a camera for determining a direction in which the occupant is pointing) as long as the camera can capture an image around the inner display 22 and the outer display 23. Further, when the touch panel 27 detects operation on the inner display 22 (or the outer display 23), the ECU 10 is only required to determine whether the finger that is operating the inner display 22 (or the outer display 23) is the thumb F1 and/or whether the fingers F2 other than the thumb F1 are placed at the inner guide portion 220 (or the outer guide portion 230) by performing image analysis on the image captured by the camera. By this means, operation and effects similar to those in the second embodiment described above can be obtained.

**<Others>**

Each of the embodiments and modifications described above is merely an example, and the present disclosure can be implemented while changes are made as appropriate within a range not deviating from the gist of the present disclosure. In one example, the inner display 22 and/or the outer display 23 may be configured to function as a controller of game content. In this case, when the game content is displayed at the meter display 21, the ECU 10 of the vehicle 1 is only required to display GUI components (for example, GUI components such as a switch, a button, and a stick) for operating the game content at the inner display 22 and/or the outer display 23. Further, the ECU 10 is only required to control display content of the game content to be displayed at the meter display 21 in accordance with touch operation input to the inner display 22 and/or the outer display 23. In such a configuration, the driver can perform touch operation on the inner display 22 and/or the outer display 23 with the thumb F1 while placing the fingers F2 other than the thumb F1 at the inner guide portion 220 and/or the outer guide portion 230. This allows the driver to accurately perform touch operation at the GUI components displayed on the inner display 22 and/or the outer display 23.

Further, the embodiments and modifications described above can be freely combined and implemented unless technical inconsistency occurs.

Further, the present disclosure can be also implemented as a display device including the configurations and functions of the embodiments and modifications described above.

**DESCRIPTION OF REFERENCE SIGNS**

| 1 | vehicle |
|---|---|
| 2 | driver seat |
| 4 | steering wheel |
| 5 | steering column |
| 10 | ECU |
| 20 | display device |
| 21 | meter display |
| 22 | inner display |
| 220 | inner guide portion |
| 221 | touch sensor |
| 2201 | wall surface |
| 2201A | first inclined surface |
| 2201B | second inclined surface |
| 2201C | third inclined surface |
| 2202 | bottom surface |
| 2203 | corner portion |
| 2204 | groove |

| 23 | outer display |
| 230 | outer guide portion |
| 24 | inner bracket |
| 25 | outer bracket |
| 27 | touch panel |
| 30 | speaker |

**Claims**

1. A vehicle comprising:

   a first display module (21) arranged in front of a steering wheel (4);
   a second display module (22,23) arranged on a vehicle (1) rear side of the first display module (21) on at least one side of the first display module (21) in a vehicle (1) width direction and including a touch panel (27); and
   a guide portion (220, 230) provided on a rear surface of the second display module (22,23) and configured to determine positions of one or more second fingers that are fingers other than a first finger that operates the touch panel (27) and to be placed on the rear surface of the second display module (22,23).

2. The vehicle according to claim 1, wherein the guide portion (220, 230) includes a dent provided on the rear surface of the second display module (22,23).

3. The vehicle according to claim 2, wherein a predetermined wall (2201) surface in the dent is formed with an inclined surface (2201A, 2201B, 2201C) that bends such that an inclination angle becomes larger stepwise toward a bottom surface of the dent.

4. The vehicle according to claim 1, wherein the guide portion (220, 230) includes two or more grooves (2204) provided on the rear surface of the second display module (22,23) and extending in the vehicle (1) width direction.

5. The vehicle according to claim 1, wherein the guide portion (220, 230) is formed to continuously or intermittently extend in a vertical direction of the vehicle (1).

6. The vehicle according to claim 1, further comprising:

   a determination module (10, 221) configured to determine whether the first finger that is operating the touch panel (27) is a thumb; and
   an output module (30) configured to output a message that encourages operation on the touch panel (27) with the thumb in response to the determination module (10, 221) determining that the first finger is not the thumb.

7. The vehicle according to claim 1, wherein the second display module (22,23) is configured to display a GUI component for operating game content displayed at the first display module (21).

8. A display device mounted on a vehicle (1), the display device comprising:

   a first display module (21) arranged in front of a steering wheel (4);
   a second display module (22,23) arranged on a vehicle (1) rear side of the first display module (21) on at least one side of the first display module (21) in a vehicle (1) width direction and including a touch panel (27); and
   a guide portion (220, 230) provided on a rear surface of the second display module (22,23) and configured to determine positions of one or more second fingers that are fingers other than a first finger that operates the touch panel (27) and to be placed on the rear surface of the second display module (22,23).

9. The display device according to claim 8, wherein the guide portion (220, 230) includes a dent provided on the rear surface of the second display module (22,23).

10. The display device according to claim 9, wherein a predetermined wall surface in the dent is formed with an inclined surface that bends such that an inclination angle becomes larger stepwise toward a bottom surface of the dent.

11. The display device according to claim 8, wherein the guide portion (220, 230) includes two or more grooves provided on the rear surface of the second display module (22,23) and extending in the vehicle (1) width direction.

12. The display device according to claim 8, wherein the guide portion (220, 230) is formed to continuously or intermittently extend in a vertical direction of the vehicle (1).

13. The display device according to claim 8, further comprising:

    a determination module (10, 221) configured to determine whether the first finger that is operating the touch panel (27) is a thumb; and
    an output module (30) configured to output a message that encourages operation on the touch panel (27) with the thumb in response to the determination module (10, 221) determining that the first finger is not the thumb.

14. The display device according to claim 8, wherein the second display module (22,23) is configured to display a GUI component for operating game content displayed at the first display module (21).

[Fig. 1]

[Fig. 2]

[Fig. 3]

OUTER SIDE
OF VEHICLE ←    25    24    → INNER SIDE
OF VEHICLE

[Fig. 4]

OUTER SIDE
OF VEHICLE ←    → INNER SIDE
OF VEHICLE

[Fig. 5]

OUTER SIDE
OF VEHICLE ← → INNER SIDE
OF VEHICLE

[Fig. 6]

OUTER SIDE
OF VEHICLE ←

→ INNER SIDE
OF VEHICLE

[Fig. 7]

OUTER SIDE
OF VEHICLE ←          → INNER SIDE
OF VEHICLE

[Fig. 8]

OUTER SIDE
OF VEHICLE

INNER SIDE
OF VEHICLE

[Fig. 9]

OUTER SIDE
OF VEHICLE

INNER SIDE
OF VEHICLE

[Fig. 10]

OUTER SIDE
OF VEHICLE ←

→ INNER SIDE
OF VEHICLE

[Fig. 11]

OUTER SIDE
OF VEHICLE $\longleftarrow$

$\longrightarrow$ INNER SIDE
OF VEHICLE

[Fig. 12]

OUTER SIDE
OF VEHICLE

INNER SIDE
OF VEHICLE

[Fig. 13]

[Fig. 14]

OUTER SIDE OF VEHICLE ←     → INNER SIDE OF VEHICLE

[Fig. 15]

OUTER SIDE
OF VEHICLE ←    → INNER SIDE
OF VEHICLE

[Fig. 16]

[Fig. 17]

[Fig. 18]

[Fig. 19]

```
                    ┌──────────┐
                    │  START   │
                    └────┬─────┘
                         │
S101 ┌───────────────────┴───────────────────┐
     │        DETECT TOUCH OPERATION          │
     └───────────────────┬───────────────────┘
                         │
S102              ╱ ──────────── ╲
              ╱      ARE            ╲        no
           ╱   FINGERS PLACED AT      ╲──────────┐
           ╲     GUIDE PORTION        ╱          │
              ╲        ?           ╱             │
                 ╲ ──────────── ╱                │
                       │ yes                     │
S103 ┌─────────────────┴─────────┐               │
     │ DETERMINE THAT FINGER      │              │
     │ THAT IS PERFORMING         │              │
     │ OPERATION IS THUMB         │              │
     └─────────────────┬─────────┘               │
                       │              ┌──────────┴──────────────┐ S104
                       │              │ DETERMINE THAT FINGER     │
                       │              │ THAT IS PERFORMING        │
                       │              │ OPERATION IS FINGER       │
                       │              │ OTHER THAN THUMB          │
                       │              └──────────┬──────────────┘
                       │              ┌──────────┴──────────────┐ S105
                       │              │ OUTPUT GUIDANCE MESSAGE   │
                       │              └──────────┬──────────────┘
                       │◄────────────────────────┘
                       │
                  ┌────┴─────┐
                  │   END    │
                  └──────────┘
```

## EUROPEAN SEARCH REPORT

**Application Number**

EP 25 22 2710

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2022 207620 A1 (PSA AUTOMOBILES SA [FR]) 1 February 2024 (2024-02-01) * paragraphs [0001], [0004], [0005], [0017], [0021], [0022]; figures 1, 3, 5 * | 1-5,8-12 | INV. B60K35/10 B60K35/22 |
| X | EP 2 902 083 A1 (SONY COMPUTER ENTERTAINMENT INC [JP] ET AL.) 5 August 2015 (2015-08-05) * paragraphs [0012], [0013], [0046]; figures 9, 10 * | 1-3,5, 8-10,12 | |
| A | EP 3 401 148 A1 (LG ELECTRONICS INC [KR]) 14 November 2018 (2018-11-14) * figure 9a * | 1-14 | |

**TECHNICAL FIELDS SEARCHED (IPC)**

B60K

The present search report has been drawn up for all claims

| Place of search | Date of completion of the search | Examiner |
|---|---|---|
| Munich | 21 April 2026 | Erbel, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 2710

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2026

| Patent document cited in search report | Publication date | Patent family member(s) | Publication date |
|---|---|---|---|
| DE 102022207620 A1 | 01-02-2024 | NONE | |
| EP 2902083 A1 | 05-08-2015 | AU 2012200432 A1 | 09-08-2012 |
| | | BR 102012001730 A2 | 12-11-2013 |
| | | CN 102681612 A | 19-09-2012 |
| | | EP 2479636 A2 | 25-07-2012 |
| | | EP 2902083 A1 | 05-08-2015 |
| | | ES 2536983 T3 | 01-06-2015 |
| | | HK 1168165 A1 | 21-12-2012 |
| | | JP 5379176 B2 | 25-12-2013 |
| | | JP 2012152357 A | 16-08-2012 |
| | | KR 20120086268 A | 02-08-2012 |
| | | RU 2012102483 A | 27-07-2013 |
| | | SG 182938 A1 | 30-08-2012 |
| | | US 2012188694 A1 | 26-07-2012 |
| | | US 2014141885 A1 | 22-05-2014 |
| EP 3401148 A1 | 14-11-2018 | EP 3401148 A1 | 14-11-2018 |
| | | KR 20180124401 A | 21-11-2018 |
| | | US 2018326851 A1 | 15-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7306210 B
- JP 2016009240 A
- JP 2007164767 A